(19) **Europäisches Patentamt**
**European Patent Office**
**Office européen des brevets**

(11) Veröffentlichungsnummer: **0 408 957 A2**

(12) # EUROPÄISCHE PATENTANMELDUNG

(21) Anmeldenummer: **90112518.7**

(22) Anmeldetag: **30.06.90**

(51) Int. Cl.⁵: **C08L 77/00**

(30) Priorität: **15.07.89 DE 3923422**

(43) Veröffentlichungstag der Anmeldung:
**23.01.91 Patentblatt 91/04**

(84) Benannte Vertragsstaaten:
**CH DE FR GB IT LI NL**

(71) Anmelder: **BAYER AG**

**D-5090 Leverkusen 1 Bayerwerk(DE)**

(72) Erfinder: **Heinz, Hans-Detlef, Dr.**
**Breslauer Strasse 31**
**D-4150 Krefeld(DE)**
Erfinder: **Fahnler, Friedrich**
**Wimmersweg 60**
**D-4150 Krefeld(DE)**
Erfinder: **Meyer, Rolf-Volker, Dr.**
**Buchheimer Strasse 23**
**D-4150 Krefeld(DE)**

(54) **Lactamschmelzen mit erhöhter Viskosität und ihre Verwendung.**

(57) Die Erfindung betrifft Lactamschmelzen mit erhöhter Viskosität, ihre Herstellung sowie ihre Verwendung, bevorzugt im Bereich der aktivierten anionischen Lactampolymerisation (Gußpolyamid). Den Lactamschmelzen werden erfindungsgemäß bestimmte (Co)Polyamide, welche sich in der Lactamschmelze lösen, zugesetzt.

EP 0 408 957 A2

## LACTAMSCHMELZEN MIT ERHÖHTER VISKOSITÄT UND IHRE VERWENDUNG

Die Erfindung betrifft Lactamschmelzen mit erhöhter Viskosität, ihre Herstellung sowie ihre Verwendung, bevorzugt im Bereich der aktivierten anionischen Lactampolymerisation (Gußpolyamid). Den Lactamschmelzen werden erfindungsgemäß bestimmte (Co)Polyamide, welche sich in der Lactamschmelze lösen, zugesetzt.

Gußpolyamidteile, z.B. aus Caprolactam hergestellt, weisen bekanntlich ein hohes Niveau der mechanischen Eigenschaften auf; aufgrund ihrer gegenüber Standardspritzgußteilen erhöhten Kristallinität sowie der wesentlich höheren Molekulargewichte sind fast alle mechanischen Eigenschaftswerte gegenüber durch Polykondensation hergestellten Polyamiden verbessert. Aus diesem Grund ist Gußpolyamid ein attraktiver Werkstoff.

Ein Nachteil gegenüber den durch Polykondensation hergestellten Polyamiden liegt aber darin, daß es sich im allgemeinen nicht thermoplastisch verarbeiten läßt. Alle Zusatzstoffe, die im Formteil anwesend sein sollen, müssen daher im allgemeinen in die Lactamschmelze vor der Polymerisation eingebracht werden.

Die Herstellung von Gußpolyamidteilen, ausgehend von niedrigviskosen Lactamschmelzen und Katalysatoren sowie Aktivatoren (aktivierte anionische Polymerisation) ist bekannt (z.B. Vieweg, Müller; Kunststoff-Handbuch Bd. VI, Carl Hanser Verlag, München 1966). Gegenüber Polyurethan-RIM-Systemen ist die Verfahrenstechnik einfacher, da z.B. aufgrund der sehr niedrigviskosen Lactamschmelzen drucklos und unter Einsatz einfacher Pumpen oder auch nach der Reaktionsspritztechnik (unter Druck) gefördert werden kann.

Für viele Einsatzgebiete wäre es nun wünschenswert, die guten mechanischen Eigenschaften von Gußpolyamidteilen weiter zu steigern, z.B. Härte, Steifigkeit und Festigkeit, vor allem auch den Kriechmodul, indem Verstärkungs- bzw. Füllstoffe zugesetzt werden, wie es von Spritzgußmaterialien her bekannt ist. Genau hier wirkt sich aber die geringe Viskosität der Lactamschmelzen sehr nachteilhaft aus, da aufgrund des Dichteunterschiedes z.B. Glasfasern sehr schnell sedimentieren. Dies macht die Herstellung eines glasfaserverstärkten Gußpolyamids auf konventionellem Wege sehr schwierig.

Es gibt vor allem 2 Methoden, die Viskosität von Flüssigkeiten zu erhöhen, nämlich einmal durch Thixotropierung und einmal durch Zugabe sich in dem Medium lösender und die Viskosität erhöhender Mittel (Verdickung).

Im Falle der apparativen Gegebenheiten bei der Herstellung von Gußpolyamidteilen kann man erwarten, daß eine Thixotropierung der Schmelze ungünstig ist, da eine Rührbarkeit und damit Dispergierbarkeit der Füllstoffe nur im unmittelbaren Bereich des Rührers gegeben ist, und daher eine homogene Verteilung der Verstärkungsstoffe kaum möglich erscheint. Weiterhin erscheint es in den üblicherweise verwendeten Apparaturen kaum möglich, die Thixotropiermittelpartikel fein genug zu verteilen, da hierzu im allgemeinen hohe Schergeschwindigkeiten benötigt werden.

Eigene Versuche bestätigen die vermuteten Nachteile der Verwendung von Thixotropiermitteln.

Daher ist die zweite Möglichkeit, die Viskosität der Lactamschmelzen durch Einbringen eines gut löslichen, die Viskosität steigernden Additivs zu erhöhen, bei weitem vorzuziehen.

Problematisch ist hier allerdings, daß die aktivierte anionische Polymerisation von Lactamen ein chemisch sehr empfindliches System darstellt, das durch die allermeisten Zusatzstoffe gestört wird. Übliche Verdickungsmittel wie Polyacrylamid stören im allgemeinen entweder die Polymerisation oder sind in den Lactamschmelzen zu wenig löslich. Polystyrol ist zwar löslich und bewirkt auch eine gewisse Andickung, stört jedoch die Polymerisation. Polyamid 6 und 66 sind hingegen von viel zu geringer Löslichkeit in Lactamschmelzen.

Überraschend wurde nun gefunden, daß die Viskosität von Lactamschmelzen durch Zusatz spezieller (Co)Polyamide drastisch erhöht werden kann, wobei die (Co)Polyamide eine gute Löslichkeit besitzen müssen, und daß durch diese Maßnahme die aktivierte anionische Polymerisation im allgemeinen nicht oder nur wenig gestört wird. Weiterhin wurde gefunden, daß diese Lactamschmelzen sich sehr gut zur Herstellung verstärkter und gefüllter Gußpolyamidteile eignen, da die Füllstoffe/Verstärkungsstoffe entweder gar nicht oder nur so langsam sedimentieren, daß eine gute homogene Verteilung resultiert.

Gegenstand der Erfindung sind daher Lactamschmelzen mit erhöhter Viskosität, dadurch gekennzeichnet, daß sie 4-30 Gew.-% (bezogen auf die verdickte Lactamschmelze), bevorzugt 6-25 Gew.-% und besonders bevorzugt 8-15 Gew.-% spezieller hochmolekularer(Co)Polyamide, bevorzugt Copolyamide, welche bei 130 °C zu mindestens 4, bevorzugt mindestens 6 und besonders bevorzugt mindestens 8 Gew.-% in der Lactamschmelze löslich sind und wobei die zur Erzielung einer ausreichenden Lösegeschwindigkeit notwendigen Temperaturen nicht oberhalb von ungefähr 200 °C, bevorzugt nicht oberhalb von ungefähr 180 °C liegen soll, enthalten, wobei die Viskosität der modifizierten Lactamschmelze mindestens 100 mPa.s

EP 0 408 957 A2

bei ungefähr 135°C betragen soll.

Gegenstand der Erfindung ist auch die Verwendung der erfindungsgemäßen Lactamschmelzen zur Herstellung von Polyamiden, bevorzugt durch aktivierte anionische Polymerisation, insbesondere zur Herstellung verstärkter und/oder gefüllter Gußpolyamidteile. Gegenstand der Erfindung sind auch ein Verfahren zur Herstellung dieser Gußpolyamidteile sowie die durch Verwendung der erfindungsgemäßen Lactamschmelzen hergestellten Gußpolyamidteile.

Als (Co)Polyamide, welche erfindungsgemäß eingesetzt werden können, sind prinzipiell alle Polyamide geeignet, welche bei ca. 130°C zu mindestens 4 Gew.-%, bevorzugt mindestens 6 Gew.-% und besonders bevorzugt mindestens 8 Gew.-% in der zu polymerisierenden Lactamschmelze löslich sind, wobei die zur Erreichung einer ausreichenden Lösegeschwindigkeit notwendige Temperatur nicht oberhalb von ungefähr 200°C, bevorzugt nicht oberhalb von 180°C und besonders bevorzugt nicht oberhalb von 170°C liegen sollte.

Geeignet sind z.B. PA 11, 12, 1010, 1212 sowie Copolyamide (deren Zusammensetzung so gewählt sein muß, daß sie die obengenannten Bedingungen erfüllen) auf Basis von Caprolactam, 66-Salz, 610-Salz, 1010-Salz, 1212-Salz, 46-Salz, Laurinlactam, Aminoundekansäure, Adipinsäure, Isophthalsäure, Terephthalsäure, Diaminodicyclohexylamin, Hexamethylendiamin, Isophorondiamin, Azelainsäure, Sebazinsäure, Dimerfettsäuren und Dimerfettaminen, welche zu einem gewissen Teil auch Ethersegmente und/oder Ester-, Urethan- und Carbonatgruppen enthalten können. Bevorzugt werden rein aliphatische Polyamide eingesetzt.

Es können in kleinen Mengen auch höher als bifunktionelle Bausteine anwesend sein, z.B. Tricarbonsäuren, Tri- und Polyamine, Trimerfettsäuren usw., zur Erzielung höherer Molekulargewichte.

Zum Beispiel können saubere Dimer- und Trimerfettsäuren getrennt eingesetzt oder gleich eine trimerhaltige Dimerfettsäure eingesetzt werden. Es können gesättigte und ungesättigte Dimersäuren eingesetzt werden.

Die eingesetzten Dimerfettsäuren sollten zumindestens 70 Gew.-%, bevorzugt mindestens 90 Gew.-%, Dimere enthalten.

Bei der Herstellung der Verdicker-Polyamide können übliche Katalysatoren eingesetzt werden, die gegebenenfalls hinterher wieder entfernt werden können.

Besonders bevorzugt werden Copolyamide auf Basis von Caprolactam, Hexamethylendiamin und Adipinsäure und/oder Azelainsäure und/oder Sebazinsäure und/oder Dimerfettsäuren eingesetzt, wobei von diesen Säuren die Dimerfettsäuren besonders bevorzugt sind.

Ganz besonders bevorzugt werden hochmolekulare Copolyamide aus Caprolactam und den obengenannten Bausteinen im Gewichtsverhältnis von ungefähr 90:15 bis ungefähr 40:60 eingesetzt.

Die rel. Viskositäten (1 %ige Lösung in m-Kresol, 25°C) der Verdicker-(Co)Polyamide sollen mindestens 2,5, bevorzugt mindestens 2,9 und besonders bevorzugt mindestens 3,2, betragen.

Die (Co)Polyamide werden den zu polymerisierenden Lactam-schmelzen in einer solchen Menge zugesetzt, daß die Viskosität (ohne Füll- und/oder Verstärkungsstoffe) mindestens ca. 100 mPa.s bei ungefähr 135°C (gemessen mit einem Brokkfield-Viskosimeter), bevorzugt mindestens 150 mPa.s, beträgt. Diese Viskosität ist im allgemeinen ausreichend, um, je nach Menge, eine ausreichende stabile Dispersion der Füll- und Verstärkungsstoffe, z.B. Glasfasern, zu erreichen. Andererseits sollte die Viskosität der Lactamschmelze (ohne Füll-/Verstärkungsstoffe) nicht höher als ungefähr 1.500 mPa.s, bevorzugt 1.000 mPa.s, liegen, da ansonsten die Verarbeitbarkeit erschwert sein kann. Je nach Molekulargewicht der (Co)-Polyamide werden dazu besonders bevorzugt 8-15 Gew.-% (bezogen auf die verdickte Lactamschmelze) der Verdicker eingesetzt. Die Verdicker werden einzeln oder in einem beliebigen Gemisch eingesetzt.

Die als Verdicker erfindungsgemäß verwendeten (Co)Polyamide sind prinzipiell bekannt und können im allgemeinen nach prinzipiell bekannten Verfahren, gegebenenfalls unter Einsatz von Katalysatoren, hergestellt werden. Bevorzugt werden sie durch Schmelzpolykondensation (+ gegebenenfalls Festphasen-Nachkondensation) hergestellt.

Als Lactame zur Herstellung des Guß-PA sind Lactame mit mindestens 4 C-Atomen im Ring geeignet. Bevorzugte Lactame sind Caprolactam und Laurinlactam. Besonders bevorzugt wird Caprolactam verwendet. Die Lactame können auch in einem beliebigen Gemisch eingesetzt werden.

Es können prinzipiell alle bekannten Katalysatoren eingesetzt werden, z.B. die Natriumsalze des Caprolactams und des Pyrrolidons, Natriumhydrid, Natriummethanolat, Caprolactammagnesiumbromid und -iodid.

Es können prinzipiell alle bekannten Aktivatoren eingesetzt werden, z.B. Isocyanate, Säurechloride, Säureanhydride, Carbodiimide, Umsetzungsprodukte aus diesen Verbindungen mit Lactamen usw.

Bevorzugte Katalysatoren sind die Natriumsalze des Caprolactams und des Pyrrolidons sowie Caprolactammagnesiumbromid und -iodid.

Bevorzugte Aktivatoren sind Isocyanate und Säurechloride bzw die jeweiligen Umsetzungsprodukte mit

3

Lactamen.

Es können neben den erfindungsgemäß einzusetzenden (Co)Polyamiden (und den bevorzugt anwesenden Füll- bzw Verstärkungsstoffen) auch (gegebenenfalls funktionalisierte) Kautschuke bzw. Weichsegmente in der Schmelze enthalten sein, z.B. Polyether, Polydiene u.a., wie sie im Stand der Technik beschrieben sind. Dabei sind funktionalisierte Weichsegmente bevorzugt, die chemisch als Blöcke in das PA eingebaut werden können.

Entsprechende Weichsegmente sowie Verfahren, sie in das PA einzubauen, z.B. über Kopplung an den Aktivator, sind in großer Zahl bekannt.

Beispielsweise können aminierte Weichsegmente, z.B. Polyether, mit Polyisocyanaten zu Isocyanat-terminierten Weichsegmenten umgesetzt werden, welche dann einen polymeren Aktivator darstellen, oder es können OH-terminierte Polyether mit Dicarbonsäuredichloriden, z.B. Terephthalsäuredichlorid, zu Säurechlorid-terminierten Polyethern und anschließend mit einem Lactam zu einem polymeren Aktivator umgesetzt werden.

Bei Anwesenheit von Elastomeren kann, je nach Menge derselben, die zur Erzielung der Viskosität von 100 mPa.s notwendige Menge an (Co)Polyamid unter Umständen auch geringer als 4 %, z.B. 2 bis 4 % sein. Solche Lactamschmelzen sind auch Gegenstand der Erfindung.

Je nach Art des Elastomersegments bzw. der Endgruppen bzw. der Art der Verknüpfung mit dem Aktivator kann die Wahl des Katalysators eingeschränkt sein, z.B. dann, wenn der Katalysator das Elastomersegment abbaut. Entsprechende optimale Kombinationen sind bevorzugt erfindungsgemäß einzusetzen.

Prinzipiell sind als Verdicker für Lactamschmelzen alle in dem jeweiligen Lactam bei ca. 140° C gut löslichen Polymere geeignet; die Wahl wird jedoch drastisch eingeschränkt, da die aktivierte anionische Polymerisation ein chemisch sehr empfindliches System darstellt, welches mit einer Vielzahl von Strukturen, insbesondere H-aciden Verbindungen, reagieren kann, was sich dann durch Polymerisationsstörungen bemerkbar macht. Die überraschende Erkenntnis war, daß die bevorzugt einzusetzenden aliphatischen (Co)-Polyamide im allgemeinen, wenn überhaupt, nur relativ geringe Polymerisationsstörungen bewirken (das Ausmaß von Polymerisationsstörungen kann von dem jeweils verwendeten Katalysator/Aktivator abhängen) und eine gute Viskositätsergiebigkeit und Löslichkeit zeigen. Die erfindungsgemäß einzusetzenden (Co)-Polyamide stellen also ein besonders geeignetes Verdickersystem dar.

Als Füll- bzw. Verstärkungsstoffe (5-60, bevorzugt 5-40 %) sind prinzipiell die üblicherweise eingesetzten geeignet, wobei, je nach Zusammensetzung der Schlichte, nicht alle gleich gut geeignet sein können. Beispiele für erfindungsgemäß einsetzbare Füll-/Verstärkungsstoffe zur Herstellung der verstärkten/gefüllten Gußpolyamidteile sind Glasfasern, Glaskugeln, mineralische Füllstoffe, Kohlenstofffasern und andere mehr, wie sie in vielfacher Weise im Stand der Technik bekannt sind; vielfach tragen sie bestimmte Schlichten oder sind entsprechend vorbehandelt, z.B. silanisiert.

Es können weiterhin alle üblichen Additive wie z.B. Entformungsmittel, UV-Stabilisatoren, Antioxidantien, Schmiermittel wie z.B. $MoS_2$ und andere, gegebenenfalls chemisch angekoppelte Legierungspartner und andere mehr anwesend sein, wie sie im Stand der Technik beschrieben sind.

Die Herstellung der erfindungsgemäßen verstärkten und/oder gefüllten Gußpolyamidteile erfolgt prinzipiell nach den üblichen Verfahren.

Die erfindungsgemäßen Lactamschmelzen finden ihre Verwendung vorzugsweise zur Herstellung von Gußpolyamid-Teilen (Fertigteile, Halbzeug und andere mehr), wobei sie für verstärkte bzw. gefüllte Typen besonders geeignet sind. Es können drucklose oder Druckverfahren (z.B. Reaktionsspritztechnik) eingesetzt werden, offene oder geschlossene Form verwendet werden und übliche, bekannte Formtemperaturen, Heizdauer, Gießzeiten, Entformungs-/Fließ-/Entschäumer-Substanzen mitverwendet werden.

Die nachfolgenden Beispiele dienen zur Erläuterung der Erfindung, ohne sie darauf einzuschränken.

Beispiele

Beispiel 1

180 g Caprolactam und 20 g eines Mischpolyamids (85 Gew.-% Caprolactam und 15 Gew.-% AH-Salz, $\eta_{rel} \cong 3,2$) wurden unter $N_2$ bei 150° C gerührt. Nach ca. 1 h war das (Co)Polyamid gelöst. Die Viskosität der Lactamschmelze betrug 180 mPa.s bei 135° C und 240 mPa.s bei 120° C.

Beispiele 2-14

In der für Beispiel 1 beschriebenen Weise wurden verschiedene Polyamide als Lactamverdicker eingesetzt. Die Zusammensetzung der Proben, Lösezeiten bei der jeweiligen Temperatur sowie die Viskositäten der Lactamschmelzen sind in Tabelle 1 angegeben.

Beispiel 15

10 g des in Beispiel 3 benutzten Copolyamids wurden unter Rühren innerhalb von 30 min bei 200° C in 67,2 g Caprolactam gelöst. Anschließend wurde auf 180° C abgekühlt, 2 g Natriumcaprolactamat-Lösung (s. Bsp.19) und 0,8 g einer aliphatischen Polyisocyanat-Lösung (KU 2-8107, ein Produkt der Bayer AG), zugegeben. Die Polymerisation setzte nach der üblichen Zeit, wie sie sich auch ohne Zusatz des (Co)-Polyamids ergibt, nämlich nach ca 45″, ein.

Beispiele 16-18

In der für Beispiel 15 beschriebenen Weise wurden verdickte Lactamschmelzen bei Anwesenheit von ca. 20 % Kurzglasfasern hergestellt. Anschließend wurden Katalysator und Aktivator wie in Beispiel 15 zugegeben und zu glasfaserverstärkten Gußpolyamidkörpern polymerisiert. Die Polymerisation setzte nach 45-60″ ein, die Guß-PA-Teile waren homogen und von gelber bis grauer Farbe.

**Tabelle 1**

| Bei- spiel | PA-Typ | Menge [1] (Gew.-%) | $\eta_{rel}$ [2] | t in h bei T ($^0$C) [3] | (mPa.s) 135$^0$C | 120$^0$C |
|---|---|---|---|---|---|---|
| 2 | MPA 1120 [4] | 15,4 | - | 2/200 | 180 | 270 |
| 3 | CoPA 6605[5][8] | 10,0 | 3,4 | 2/200 | 120 | 240 |
| 4 | CoPA (1) [6] | 10,0 | 2,7 | 1/130 | 150 | 180 |
| 5 | CoPA (2) [6] | 10,0 | 2,9 | 1/145 | 150 | 180 |
| 6 | CoPA (3) [6] | 10,0 | 3,6 | 1/155 | 240 | 330 |
| 7 | CoPA (4) [6] | 10,0 | 4,3 | 1/165 | 660 | - |
| 8 | CoPA (5) [7] | 10,0 | 3,0 | 0,5/140 | 90-120 | 150 |
| 9 | CoPA 6617 [8] | 10,0 | 4,0 | 1/150 | 270 | 360 |
| 10 | CoPA 6617 [8] | 7,5 | 4,0 | 1/150 | 90-120 | 120 |
| 11 | CoPA 6633 [8] | 10,0 | 3,9 | 3/125 | 150 | 270 |
| 12 | CoPA 6644 [8] | 10,0 | 3,3 | 3,5/125 | 180 | 300 |
| 13 | CoPA 6654 [8] | 10,0 | 4,6 | 5/125 | 240 | 420 |
| 14 | CoPA 6633 [8] | 10,0 | 3,7 | 1,5/140 | 300 | 390 |

1) Bezogen auf die Summe von Caprolactam und PA

2) 1 Gew.-% in m-Kresol bei 25° C

3) Lösezeit

4) MPA = Mischpolyamid; 1120 = 80 Gew.-% Caprolactam und 20 Gew.-% Aminoundecansäure-Einheiten im CoPA

5) Copolyamid, hergestellt in diesem Fall aus 95 Teilen Caprolactam und 5,8 Teilen AH-Salz (nicht extrahiert)

6) Die CoPA (1)-(4) sind Copolyamide aus 35, 45, 50 und 81 Teilen Caprolactam und 38,9, 23,3, 15,5 und 11,0 Teilen Dimerfettsäure (Pripol 1010)/Hexamethylendiamin

7) CoPA (5) wurde aus 5,6 kg Caprolactam und 2,66 kg Dimerfettsäure/Hexamethylendiamin hergestellt. Es war nicht extrahiert.

8) Die 1. Zahl gibt das Gew-Teil Caprolactam, die 2. das Gew.-Teil AH-Salz an, aus denen das CoPA hergestellt wurde. Die CoPA waren nicht extrahiert.

Wie die Beispiele zeigen, sind die erfindungsgemäß einzusetzenden (Co)Polyamide sehr gut als Lactamverdicker geeignet.

Beispiel 19

Eine 2-Komponenten-Anlage mit den Dosierkesseln "A" und "B" wird mit je 18 kg Caprolactam und 2 kg eines Copolyamids auf Basis von Caprolactam und Dimerfettsäure (Pripol 1010, Unichema)-/Hexamethylendiamin (30 % Co-Anteil; CoPA(5) beschickt und auf 150° C erhitzt.

Nach 5 h Lösezeit unter $N_2$-Atmosphäre wird diese Lactamschmelze mit erhöhter Viskosität auf 125° C abgekühlt. Komponente A wird mit 0,7 % einer Aktivatorlösung auf Basis eines Polyisocyanats (KU 2-8107, ein Produkt der Bayer AG) und Komponente B mit 1,8 % Natriumcaprolactamat-Lösung (Katalysator NL neu, ein Produkt der Bayer AG) versetzt und nach wenigen Minuten je 3 kg einer gemahlenen Glasfaser mit einer durchschnittlichen Länge von 150 μ bei 12 μ Durchmesser unter Rühren zugegeben. Nach weiteren 5 min kann die Anlage mittels verschleißfest ausgestatteter Zahnradpumpen in Betrieb genommen werden. Die glasfaserhaltige Lactamschmelze ist hiermit verarbeitungsbereit.

Zur Verarbeitung zu Halbzeug werden die beiden Schmelzströme über einen 2-Komponenten-Mischkopf vereinigt und in auf 155° C erhitzte Formen für Rundstäbe verschiedenen Durchmessers eingetragen. Die Polymerisation der Lactamschmelze ist nach 3 min abgeschlossen.

Die nach Entformen erhaltenen Rundstäbe weisen eine leicht graue Eigenfarbe auf.

An zwei Stellen unterschiedlicher Höhe wurde in einem Fall die Glasfaserverteilung durch Veraschung (Fehler ± 1 %) zu 13,9-14,1 (höher) und 11,7-14,3 % (niedriger) (Soll = 15 %) bestimmt. Die Biegefestigkeit, bestimmt an aus einem Rundstab durch spanabhebende Bearbeitung erhaltenen Prüfkörpern, betrug 140 MPa, der Biege-E-Modul 4281 MPa.

Vergleichsversuch:

Ohne die erfindungsgemäß einzusetzenden (Co)Polyamide läßt sich kein glasfaserhaltiges Reaktionsgieß-Polyamid 6 herstellen, da die Fasern augenblicklich zu sedimentieren beginnen.

Beispiel 20

a) Herstellung eines Copolyamid-Verdickers)

7 kg Caprolactam, 2,52 kg Dimerfettsäure (Pripol 1010, 100 g Trimerfettsäure (Pripol 1049) und 738 g wäßrige Hexamethylendiamin-Lösung ($\hat{=}$548,8 g Diamin) wurden in einem 25 l Autoklaven nach Inertisierung unter Eigendruck 1 h lang auf 200°C erhitzt und anschließend, nach Entspannen, bei einem $N_2$-Strom von 40 l $h^{-1}$ bei 270°C 4 h lang polykondensiert.

Das resultierende Copolyamid besaß eine rel. Viskosität von 3,7.

b) Lösungen in Caprolactam-Schmelzen

Viskositätswerte von Mischungen mit Caprolactam (gelöst bei 150°C) sind in Tabelle 2 zusammengestellt:

Tabelle 2

| Menge CoPA[1] | $\eta$ bei 135°C[2] | 120°C | 110°C |
|---|---|---|---|
| 8% | 120-150 | 180 | 210-240 |
| 10% | 180 | 210 | 270 |
| 12% | 270 | 420 | 630 |
| 15% | 900 | 1320 | 1800 |

[1] bezogen auf Mischung
[2] [mPa.s]

**Ansprüche**

1. Lactamschmelzen mit erhöhter Viskosität, dadurch gekennzeichnet, daß sie 4-30 Gew.-% (bezogen auf die Lactamschmelze mit erhöhter Viskosität), bevorzugt 6-25 Gew.-% und besonders bevorzugt 8 bis 15 Gew.-% spezieller hochmolekularer (Co)Polyamide, bevorzugt Copolyamide, welche bei 130°C zu mindestens 4, bevorzugt mindestens 6 und besonders bevorzugt mindestens 8 Gew.-% in der Lactamschmelze löslich sind und wobei die zur Erzielung einer ausreichenden Lösegeschwindigkeit notwendige Temperatur nicht oberhalb von ungefähr 200°C, bevorzugt nicht oberhalb von ungefähr 180°C, besonders bevorzugt nicht oberhalb von 170°C, liegen soll, enthalten und wobei die Viskosität der resultierenden Lactamschmelze (ohne Füll- oder Verstärkungsstoffe) mindestens 100 und bevorzugt mindestens 150 mPa.s bei 135°C betragen soll.

2. Lactamschmelzen nach Anspruch 1, dadurch gekennzeichnet, daß als Verdicker-(Co)Polyamide beispielsweise PA 11, 12, 1010, 1212 sowie Copolyamide (deren Zusammensetzung so gewählt sein muß, daß sie die obigen Bedingungen erfüllen) auf Basis von Caprolactam, 66-Salz, 610-Salz, 1010-Salz, 1212-Salz, 46-Salz, Laurinlactam, Aminoundekansäure, Adipinsäure, Isophthalsäure, Terephthalsäure, Diaminodicyclohexylamin, Hexamethylendiamin, Isophorondiamin, Azelainsäure, Sebazinsäure, Dimerfettsäuren und Dimerfettaminen (wobei auch geringe Mengen höher als bifunktionelle Bausteine, insbesondere Trimerfettsäuren, anwesend sein können, welche zu einen gewissen Teil auch Ethersegmente und/oder auch Ester, Urethan- und Carbonatgruppen enthalten können, eingesetzt werden.

3. Lactamschmelzen nach Anspruch 1, dadurch gekennzeichnet, daß als Verdicker besonders bevorzugt Copolyamide auf Basis von Caprolactam, Hexamethylendiamin und Adipinsäure und/oder Azelainsäure und/oder Sebazinsäure und/oder Dimerfettsäuren mit einem Gewichtsverhältnis von Caprolactam zur Summe der Comonomeren von 90:10 bis ungefähr 40:60 eingesetzt werden, und wobei auch geringe Mengen an höher als bifunktionellen Bausteinen anwesend sein können, und wobei die Dimerfettsäuren zu mindestens 70, bevorzugt mindestens 90 Gew.-%, dimere Fettsäure enthalten sollen.

4. Lactamschmelzen nach Anspruch 1, dadurch gekennzeichnet, daß die rel. Viskositäten (1 %ige Lösung in m-Kresol, 25°C) der Verdicker-(Co)Polyamide mindestens 2,5, bevorzugt mindestens 2,9 und besonders bevorzugt mindestens 3,2, betragen.

5. Lactamschmelzen nach Anspruch 1, dadurch gekennzeichnet, daß als Lactam bevorzugt Caprolactam, gegebenenfalls in Kombination mit anderen Lactamen (bevorzugt Laurinlactam), eingesetzt wird.

6. Lactamschmelzen nach Anspruch 1, dadurch gekennzeichnet, daß (gegebenenfalls einbaubare) Weichsegmente bzw Elastomere anwesend sind.

7. Lactamschmelzen nach Anspruch 1, dadurch gekennzeichnet, daß sie Füll- und/oder Verstärkungsstoffe in einer Menge von 5-60, bevorzugt 5-40 Gew.-% enthalten und, daß als Füll- bzw. Verstärkungsstoffe die bekannten Füllstoffe/Verstärkungsstoffe wie z.B. mineralische Füllstoffe, Glaskugeln, Glasfasern, Kohlenstoffasern und andere mehr eingesetzt werden.

8. Verwendung der Lactamschmelzen nach Ansprüchen 1 -7 zur Herstellung von Polyamiden, insbesondere durch aktivierte anionische Polymerisation (Gußpolyamid) unter Verwendung üblicher Katalysatoren und Aktivatoren sowie gegebenenfalls unter Zusatz üblicher Zusatzstoffe.

9. Gußpolyamid-Artikel, hergestellt aus Lactamschmelzen nach Ansprüchen 1-7 unter Verwendung üblicher Katalysatoren und Aktivatoren sowie gegebenenfalls weiterer üblicher Zusatzstoffe.

10. Verfahren zur Herstellung der Gußpolyamid-Artikel nach Anspruch 9 unter Verwendung der Lactamschmelzen nach Ansprüchen 1 - 7, dadurch gekennzeichnet, daß die Lactamschmelzen bei Anwesenheit üblicher Katalysatoren und Aktivatoren, im allgemeinen unterhalb des Schmelzpunkts des jeweils entstehenden Polyamids, polymerisiert werden.